# EUROPEAN PATENT SPECIFICATION

(11) **EP 0 542 535 B1**
(45) Date of publication and mention of the grant of the patent: **01.04.1998**
(21) Application number: 92310316.2
(22) Date of filing: 12.11.1992
(51) Int. Cl.: H04B 10/18

(54) **Method of optical signal communication**
Verfahren für die Nachrichtenübertragung optischer Signale
Méthode de communication par signaux optiques

(30) Priority: 14.11.1991 JP 298636/91
(43) Date of publication of application: 19.05.1993
(73) Proprietor: NEC CORPORATION, Tokyo (JP)
(72) Inventor: Yamazaki, Shuntaro, c/o NEC Corporation, Tokyo (JP); Ogata, Takaaki, c/o NEC Corporation, Tokyo (JP)
(74) Representative: Orchard, Oliver John

(56) References cited:
- EP-A- 0 404 054
- EP-A- 0 426 357
- ELECTRONICS LETTERS. vol. 24, no. 12, 9 June 1988, STEVENAGE GB pages 759 - 760 K.IWASHITA ET AL 'Compensation of 202 km Single-Mode Fibre Chromatic Dispersion in 4 Gbit/s Optical CPFSK Transmission Experiment'
- PATENT ABSTRACTS OF JAPAN vol. 13, no. 159 (P-858)18 April 1989 & JP-A-63 318 530

## Description

This invention relates to methods of optical signal communication and in particular to methods for suppressing the influence of in-fiber non-linear distortion, which poses a problem for long-distance coherent optical communication systems employing light or optical amplifier repeaters.

Optical fiber amplifiers enable long-distance multi-stage repeatered transmission optical communication systems of several thousands of kilometres in length to exist. The use of coherent optical signal communication is considered to be advantageous for such long-distance transmission systems. Coherent optical systems have advantages in that they have high receiver sensitivity, and in that there can be compensations for the influence of waveform dispersion by a transmission line in an intermediate frequency (IF) band circuit of a receiver.

When the output power of an optical signal repeater is high, distortion by a non-linear optical effect is sometimes produced in an optical fiber, which limits the transmission distance. This phenomenon is particularly noticeable when the dispersion value of an optical fiber is high, as described below. When high waveform dispersion is present in a transmission line, amplitude distortion is produced during transmission, even in an optical signal having a fixed envelope, as with a frequency-shift-keying (FSK) modulated light signal. The amplitude distortion is converted into phase distortion of the optical signal by way of the Kerr effect of the fiber. Consequently, the phase variation (frequency shift amount) of the optical signal after transmission is caused to deviate from a value set in advance at the transmission end, and accordingly, the effective receiver sensitivity is reduced. Since this phenomenon increases as the output power of the repeater increases, it is a serious obstacle to the lengthening of the distance between repeaters.

In Electronics Letters, Vol. 24, No. 12, dated June 9 1988 and published by the IEE, there is a report, at pages 759-760 by K.Iwashita and N. Takachio entitled "Compensation of 2-2 km. single-mode fibre chromatic dispersion in 4 G bit/s optical CPFSK transmission experiment" in which it was said that a 1.8 dB degradation in single-mode fibre transmission caused by fibre chromatic dispersion had been completely compensated for using a microstrip line delay equaliser with optical heterodyne detection.

A feature of an arrangement to be described in illustration of the invention is the provision of a method of optical communication in which degradation of the receiver sensitivity is less likely to occur. First, the principle by which receiver sensitivity degradation caused by in-optical fiber wavelength dispersion and the Kerr effect can be minimised will be described.

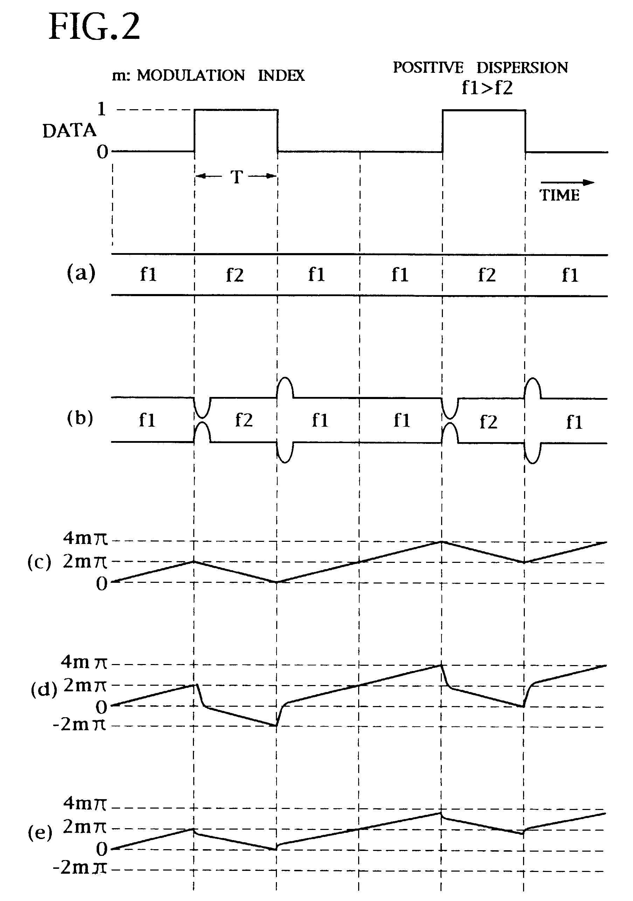

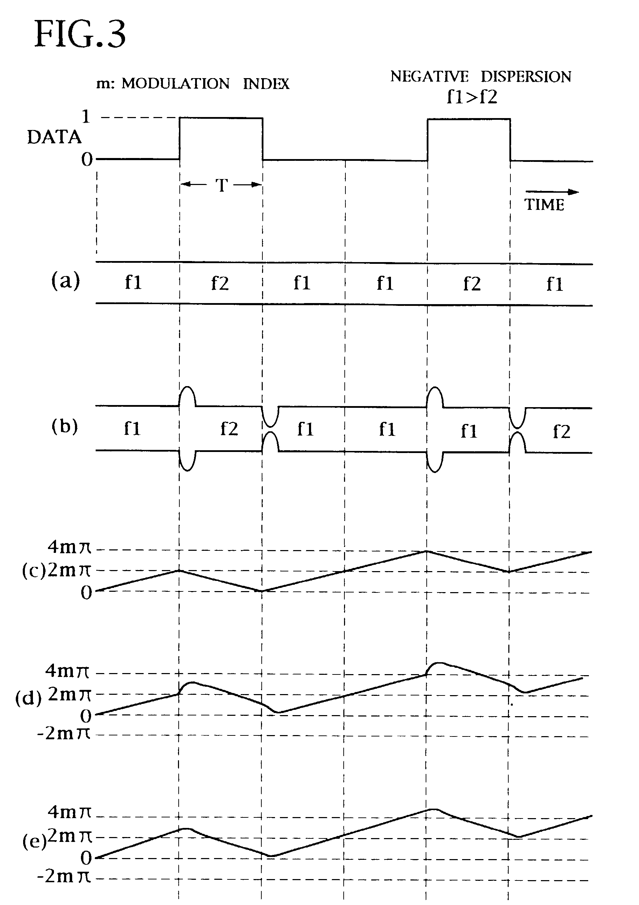

When the dispersion of a transmission line is positive in the optical signal wavelength region, the lower the frequency of the light (the longer the wavelength), the longer will be the delay produced in the transmission time. As the delay is produced, amplitude distortion is produced in an FSK modulated optical signal at the change-over point between adjacent bits. This effect is schematically illustrated in Figure 2. The curve (a) of Figure 2 shows an optical signal envelope before transmission, and the curve (b) of Figure 2 shows an envelope after transmission of the optical signal distorted by the influence of dispersion. Figure 2 is based on the assumptions that the dispersion of the transmission line is in the positive region and that the frequency f1 on the space side of the FSK modulated light is higher than the frequency f2 on the mark side. It can be seen from the curve (b) of Figure 2 that the amplitude decreases immediately after the bit changes over from f1 to f2 and that the amplitude increases immediately after the bit changes over from the frequency f2 to the frequency f1. The amplitude variations vary the phase of the optical signal due to the Kerr effect. Since the direction of rotation of the phase increases in proportion to the power of the light, the phase is delayed immediately after the bit changes over from the frequency f1 to the frequency f2, but the phase leads immediately after the bit is changed over from f2 to f1 (Yamamoto *et al*., "Analysis of amplifier spontaneous emission induced self-phase modulation to intensity noise conversion by fiber chromatic dispersion in optical amplifier system". *Autumnal National Conference of Electronic Information Communications Institute in 1991 SB-8-4*). This effect can be seen from the curves (c) and (d) of Figure 2. In particular, the curve (c) of Figure 2 shows the phase of an optical signal before transmission, and the curve (d) of Figure 2 shows the phase of the optical signal after transmission. While the variation of the phase before transmission has linear characteristics, as may be seen from the curve (c) of Figure 2, the phase variation after transmission involves non-linear behaviour, as may be seen from the curve (d) of Figure 2, particularly at the change-over points between adjacent bits. It can thus be seen from Figure 2 that the variation of the phase after transmission is greater than the variation of the phase before transmission. On the contrary, when the dispersion value is in the negative region, the variation of the phase after transmission decreases compared with that before transmission, as can be seen from Figure 3. When such a phase detecting circuit as a delay detector is employed for a demodulating circuit, there is a deterioration of the demodulation waveform according to the deviation of the phase variation.

In a particular arrangement to be described below a method of optical communication employing optical frequency-shift-keying is used in a coherent optical communication system, the method including the step of setting the modulation index at the transmitting station to a smaller value or a greater value, according to whether the dispersion value of the optical fiber serving as the transmission line is positive or negative, respectively, than the value at which the best receiver sensitivity is realized in a condition in which the optical fiber is not in its transmitting condition, thereby to minimise degradation of the receiver sensitivity caused by non-linear distortion which is produced in the optical fiber.

With the optical communication method to be described, the waveform distortion is ideally kept to its minimum level by setting, in anticipation of an increase or a decrease of the phase variation, the amount of frequency shift to a lower or a higher value at the transmitting station.

The curves (e) of Figures 2 and 3 illustrate variations in phase after transmission when the present method is used. In particular, the curves (e) of Figures 2 and 3 show phases of signal light after transmission when the modulation index is adjusted. It can be seen that the phase variation within one bit substantially coincides with that before transmission.

A further aspect of a method to be described with reference to an optical frequency-shift-keying coherent communication system employing a delay detection system includes the step of setting, when the dispersion value of an optical fiber serving as the transmission line is positive or negative, the amount of delay at a delay detection circuit in a receiving station to a smaller value or a greater value, respectively, than the value at which the best receiver sensitivity is realized in a condition in which the optical fiber is not in its transmitting condition, thereby to minimise degradation of the receiver sensitivity caused by non-linear distortion which is produced in the optical fiber.

With such an optical communication method, a demodulating circuit which is optimum to an increased phase variation is used. A delay detection circuit has the characteristic of being capable of demodulating a frequency-shift-keying modulated signal having a comparatively large amount of frequency shift by decreasing the delay time. Making use of this characteristic, distortion of the waveform can be reduced by decreasing the delay time in accordance with an increase in the phase variation, that is, with an increase in the amount of frequency shift.

With the optical communication methods described, the degradation of receiver sensitivity caused by dispersion in an optical fiber and by non-linear optical effects can be reduced.

Embodiments illustrating the invention will now be described, by way of example, with reference to the accompanying drawings, in which:-
Figure 1 is a block diagram showing a transmission system;
Figure 2 is a diagram illustrating waveforms which enable one aspect of the principle of the present invention to be explained;
Figure 3 is a diagram illustrating waveforms which enable another aspect of the principle of the present invention to be explained;
Figure 4 shows waveforms illustrating an advantage obtained by employing a first aspect of the present invention; and
Figure 5 shows waveforms illustrating an advantage obtained by employing a second aspect of the present invention.

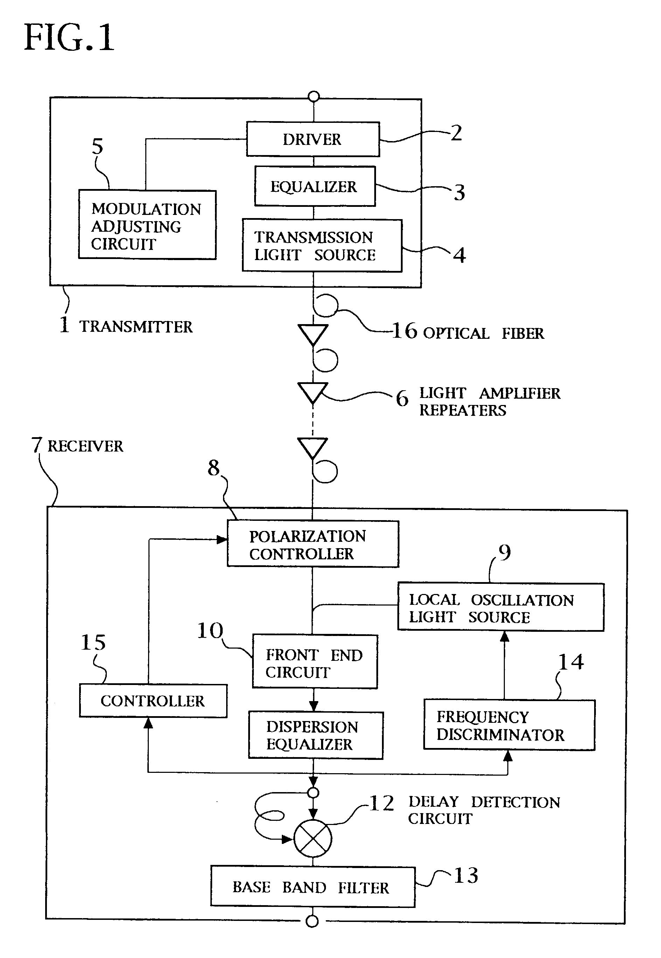

First, an optical communication method illustrating one aspect of the present invention will be described. Figure 1 shows a 2.5 Gb/s CPFSK optical heterodyne detection transmission system with a transmission distance of 800 km to which the present invention is applied. A transmitter 1 includes a driver circuit 2 from which a current modulated signal, corresponding to an input data signal is outputted. The current modulated signal is supplied to an equalizer 3, at which it is equalized in advance according to the frequency characteristic of a transmission light source 4, and then it is applied to the transmission light source 4. Meanwhile, the current amplitude of a current modulating signal, that is the modulation index, is controlled to a suitable value by a modulation index controlling circuit 5.

Signal light emitted from the transmitter 1 is received by a receiver 7 after passing seven light amplifier repeaters 6 installed in a spaced relationship from each other by a distance of 100 km. The average of the light output power of each of the light amplifier repeaters 6 is +8 dBm. The dispersion value of an optical fiber 16 of the transmission line is 17 ps/nm/km in the 1.55 micron band of the signal light wavelength. A polarization controller 8 is provided in the receiver 7, and the polarization of signal light is controlled by a controller 15 so that an intermediate frequency signal may be maximum. After light emitted from a local oscillation light source 9 and the signal light are combined, it is heterodyne detected by a front end circuit 10. The center emission of the intermediate frequency signal outputted from the front end circuit 10 is set to 5 GHz, and from the signal, distortion caused by waveform dispersion is removed by a dispersion equalizer 11. A frequency discriminator 14 controls the frequency of the local oscillation light source 9 so that the intermediate frequency signal may be stabilized at 5 GHz. A delay detection circuit 12 has a delay time set so that a maximum demodulation amplitude may be obtained when the modulation index of the signal light is 0.8 (frequency shift amount 2 GHz). The output of the delay detection circuit 12 is inputted to a base band filter 13 having the cut-off frequency of 2.5 GHz, at which noise is removed from the input signal.

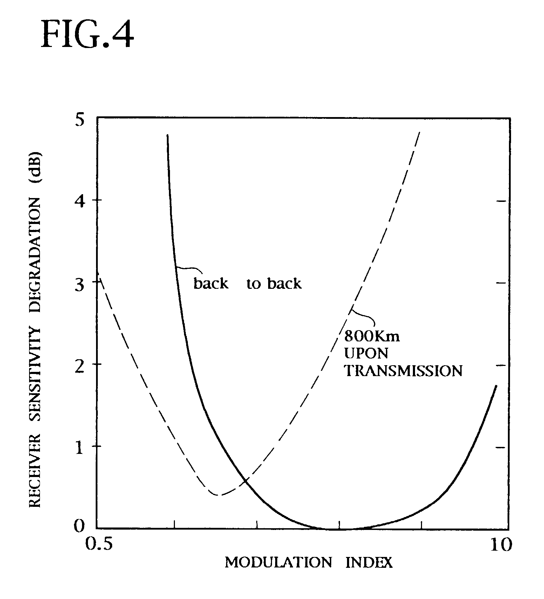

Figure 4 illustrates results of measurements of the modulation index dependency of the receiver sensitivity degradation when signal light is not launched and is launched into the 800 km transmission line. It can be seen from Figure 4 that, by setting the modulation index to 0.64, the receiver sensitivity degradation of 2.4 dB can be suppressed to 0.4 dB at the utmost.

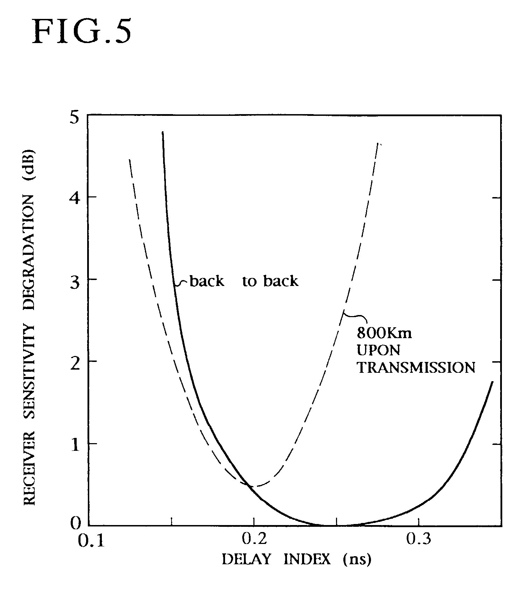

An optical communication method employing a second aspect of the present invention will now be described. In this embodiment, the optical communication method employing a second aspect of the present invention is applied to the system of Figure 1. The modulation index of signal light is set to 0.8. The dependency of the receiver sensitivity degradation upon the delay time of the delay detection circuit 12 is illustrated in Figure 5. It can be seen from this figure that the receiver sensitivity is highest when the delay time is 0.25 ns. When transmission was effected while the delay time was fixed, the sensitivity degradation of 2.5 dB was produced. Then, when the delay time was reduced to 0.2 ns, the receiver sensitivity degradation was reduced to 0.5 dB. It is to be noted that, as the delay time was reduced, the IF center frequency was changed to 6.25 GHz.

While the dispersion of an optical fiber is set in the positive region in the embodiments described above, on the contrary when the dispersion is in the negative region, the sensitivity degradation can be reduced either by increasing the modulation index, or by increasing the delay time.

Since a theoretically optimum modulation index or delay amount can be calculated if the positive or negative sign and a value of dispersion of an optical fiber is known, the circuit parameters should be determined from the result of the calculation so that the receiver sensitivity may have the relationship described above. Further, it is readily possible to adjust the circuit parameters arbitrarily to suitable values.

It will be appreciated that, although the invention has been described, by way of example, with reference to particular embodiments, variations thereof and modifications thereto may be made, and that other embodiments may be conceived within the scope of the invention as defined in the appended claims.

## Claims

1. A method for use in a coherent optical communication system employing optical frequency-shift-keying, characterized in that it includes the step of setting, when the dispersion value of an optical fiber (16) serving as a transmission line is positive or negative, a modulation index at a transmitting station (1) of a smaller value or a greater value, respectively, than the value at which the best receiver sensitivity is achieved when the optical fiber (16) is not in its transmitting condition, thereby to minimise the degradation of the receiver sensitivity caused by non-linear distortion which occurs in the optical fiber (16).

2. A method for use in a coherent optical communication system employing optical frequency-shift-keying delay detection, characterized in that it includes the step of setting, when the dispersion value of an optical fiber (16) serving as a transmission line is positive or negative, the amount of delay in a delay detection circuit (12) at a receiving station (7) to a smaller value or a greater value, respectively, than the value at which the best receiver sensitivity is achieved when the optical fiber (16) is not in its transmitting condition, thereby to minimise the degradation of the receiver sensitivity caused by non-linear distortion which occurs in the optical fiber (16).

## Patentansprüche

1. Verfahren zur Anwendung in einem kohärenten optischen Kommunikationssystem mit optischer Frequenzumtastung, gekennzeichnet durch einen Schritt, in dem bei positivem bzw. negativem Dispersionswert eines als Übertragungsleitung dienenden Lichtwellenleiters (16) ein Modulationsindex in einer Sendestation (1) auf einen Wert eingestellt wird, der kleiner bzw. größer ist als der Wert, bei dem im Nichtübertragungszustand des Lichtwellenleiters (16) die höchste Empfängerempfindlichkeit erreicht wird, um dadurch die Degradation der Empfängerempfindlichkeit zu minimieren, die durch eine im Lichtwellenleiter (16) auftretende nichtlineare Verzerrung verursacht wird.

2. Verfahren zur Anwendung in einem kohärenten optischen Kommunikationssystem mit Verzögerungsdetektion der optischen Frequenzumtastung, gekennzeichnet durch einen Schritt, in dem bei positivem bzw. negativem Dispersionswert eines als Übertragungsleitung dienenden Lichtwellenleiters (16) der Verzögerungsbetrag in einer Verzögerungsdetektionsschaltung (12) in einer Empfangsstation (7) auf einen Wert eingestellt wird, der kleiner bzw. größer ist als der Wert, bei dem im Nichtübertragungszustand des Lichtwellenleiters (16) die höchste Empfängerempfindlichkeit erreicht wird, um dadurch die Degradation der Empfängerempfindlichkeit zu minimieren, die durch eine im Lichtwellenleiter (16) auftretende nichtlineare Verzerrung verursacht wird.

## Revendications

1. Procédé à utiliser dans un système de communication optique cohérente employant la modulation par déplacement de fréquence optique, caractérisé en ce qu'il comprend l'étape consistant à fixer, lorsque la valeur de dispersion d'une fibre optique (16) servant de ligne de transmission est positive ou négative, un indice de modulation au niveau d'une station émettrice (1) à une valeur plus petite ou à une valeur plus grande, respectivement, que la valeur à laquelle on atteint la meilleure sensibilité de récepteur lorsque la fibre optique (16) n'est pas dans son état d'émission, afin de minimiser ainsi la dégradation de la sensibilité du récepteur provoquée par une distorsion non linéaire qui se produit dans la fibre optique (16).

2. Procédé à utiliser dans un système de communication optique cohérente employant la détection de retard dans la modulation par déplacement de fréquence optique, caractérisé en ce qu'il comprend l'étape consistant à fixer, lorsque la valeur de dispersion d'une fibre optique (16) servant de ligne de transmission est positive ou négative, la valeur du retard dans un circuit de détection de retard (12) au niveau d'une station réceptrice (7) à une valeur plus petite ou à une valeur plus grande, respectivement, que la valeur à laquelle on atteint la meilleure sensibilité de récepteur lorsque la fibre optique (16) n'est pas dans son état d'émission, afin de minimiser ainsi la dégradation de la sensibilité du récepteur provoquée par la distorsion non linéaire qui se produit dans la fibre optique (16).
